# EUROPEAN PATENT APPLICATION

(11) **EP 2 617 641 A1**
(43) Date of publication of application: **24.07.2013**
(21) Application number: 10857336.1
(22) Date of filing: 28.12.2010
(51) Int. Cl.: B63B 27/00, B63C 3/08, B63B 25/22, F03D 11/00, B63H 21/36

(54) **WIND TURBINE ASSEMBLY MOVING DEVICE AND METHOD FOR LOADING/UNLOADING WIND TURBINE ASSEMBLY USING SAME**

(30) Priority: 05.11.2010 KR 20100110067; 14.09.2010 KR 20100090076; 14.09.2010 KR 20100090074; 14.09.2010 KR 20100090073
(71) Applicant: Daewoo Shipbuilding&Marine Engineering Co., Ltd., Seoul 100-180 (KR)
(72) Inventor: KIM, Byung Jun, Bucheon-si Gyeonggi-do 422-230 (KR); KO, Jae Cheol, Incheon 407-054 (KR); YOO, Sung Mo, Seongnam-si Gyeonggi-do 463-020 (KR)
(74) Representative: Tischner, Oliver
(86) International application number: PCT/KR2010/009402
(87) International publication number: WO 2012/036352

(57) **Abstract**

A wind power generator assembly moving apparatus includes: a rail installed on a dedicated wind power generator installing ship such that one end thereof is located inside an operation radius of a crane and an opposite end thereof is located outside the operation radius of the crane; a movable deck installed to be movable along the rail and provided such that a wind power generator assembly is loaded on the movable deck; a driving unit provided to move the movable deck; and an anchoring unit provided to fix the wind power generator assembly loaded on the movable deck to the movable deck.

## Description

### [Technical Field]

The present invention relates to a wind power generator assembly moving apparatus and a method of loading and unloading a wind power generator assembly by using the same, and more particularly to a wind power generator assembly moving apparatus which transports a wind power generator assembly from a harbor to an offshore installation area while the wind power generator assembly is assembled and moves the wind power generator assembly with a movable deck such that the wind power generator assembly is moved across an operation radius of a crane, thereby remarkably reducing installation time, and a method of loading and unloading a wind power generator assembly by using the same.

### [Background Art]

If the atmosphere does not exist in the earth, the solar energy received from the sun would be emitted as it is and an average temperature of a surface of the earth would reach -20 degrees Celsius. However, as the earth contains the atmosphere, light of a long wavelength received from the sun is not emitted to the outside but absorbed into the air to increase the momentums of gas molecules, resulting in an average temperature of a surface of the earth of up to 15 degrees Celsius.

However, in recent years, as the industries are developing, fossil fuels such as petroleum and coals are being increasingly used, and as forests are being destroyed to secure farmland, an amount of carbon dioxide causing the green house effect is rapidly increasing, resulting in acceleration of global warming.

Thus, the international society regulates an amount of carbon dioxide emitted from the nations through various international agreements to prevent disasters such as unusual changes in weather due to global warming.

Studies and developments of alternative energies which can replace fossil fuels are being actively conducted as an effort to reduce an amount of green house gas.

The alternative energies which have been being actively studied and developed currently relate to solar heat power generation, solar light power generation, tidal power generation, wave power generation, geothermal power generation, seawater temperature power generation, and wind power generation, which utilize the natural environment.

Among them, the wind power generation is accompanied by the most inexpensive maintenance costs and the highest economical feasibility, which compels the nations to hurry the development of the wind power generation.

Moreover, the wind power generation apparatus for wind power generation can be simply configured and installed as compared with the other alternative energies and can be easily operated and managed, allowing an unmanned and automated operation thereof.

Due to the advantages, wind power generation systems of a total capacity of 32,154 MW are being operated worldwide as of the end of 2002. It is preferable that wind speed is high and a direction of wind is constant according to time and seasons in an installation site of the wind power generation system. Thus, large-scale wind power generation complexes are being constructed at offshore sites where there are less restrictions on installation and wind speed is relatively high as compared with the land.

However, an operation of transporting a large-scale heavy wind power generation structure such as a tower or a blade and assembling and installing the structure at a high offshore location from is so difficult that a sufficient number of wind power generation equipment is not installed.

According to the related art, after a tower, a nacelle, and a blade are fed while being disassembled by using a barge to transport a wind power generation structure, they are assembled and installed at an offshore installation site.

However, when a wind power generation structure is assembled on a barge whose reference surface is changed, the assembling operation becomes very difficult and excessive time is required.

### [Disclosure]

### [Technical Problem]

Accordingly, the present invention has been made keeping in mind the above problems occurring in the prior art, and an object of the present invention is to provide a wind power generator moving apparatus by which an assembling time for a wind power generator configured to be movable on a ship can be reduced by feeding the wind power power generator to an offshore installation site after the wind power generator is assembled on the land, making it possible to significantly reduce an entire wind power generator installing time, and a method of transporting and loading/unloading a wind power generator assembly by using the same.

Another object of the present invention is to provide a wind power generator moving apparatus by which a space for assembling the wind power generator can be excluded by easily moving the wind power generator assembly on the ship and feeding the wind power generator assembly to an offshore installation site while the wind power generator assembly is assembled in advance, making it possible to improve a spatial utilization of the ship, and a method of transporting and loading/unloading a wind power generator assembly by using the same.

Another object of the present invention is to provide a wind power generator moving apparatus by which a wind power generator installing operation can be performed even with a crane having a small operation radius by easily moving the wind power generator assembly on the ship, and a method of transporting and loading/unloading a wind power generator assembly by using the same.

Another object of the present invention is to provide a wind power generator moving apparatus by which a driving unit can be easily used even in a severely cold area where a hydraulic motor cannot be used due to a high viscosity of the hydraulic oil by employing an electric motor, thereby making it possible to prevent a breakdown of the driving unit in advance, and a method of transporting and loading/unloading a wind power generator assembly by using the same.

Another object of the present invention is to provide a wind power generator moving apparatus by which energy efficiency can be maximized by installing a frequency converter for driving the electric motor and a transformer for adjusting voltage according to a load, and a method of transporting and loading/unloading a wind power generator assembly by using the same.

Another object of the present invention is to provide a wind power generator moving apparatus by which hydraulic equipment installed in an existing ship can be used as it is by employing a hydraulic motor in the driving unit, which does not require separate accidental expenses for driving, and a method of transporting and loading/unloading a wind power generator assembly by using the same.

Another object of the present invention is to provide a wind power generator moving apparatus by which an installation area for an output can be smaller by employing a hydraulic motor in the driving unit, allowing a sufficient available area on the ship, and a method of transporting and loading/unloading a wind power generator assembly by using the same.

Another object of the present invention is to provide a wind power generator moving apparatus by which contamination of the ocean can be prevented even when oil is leaked by installing a protection box around the hydraulic motor, and a method of transporting and loading/unloading a wind power generator assembly by using the same.

Another object of the present invention is to provide a wind power generator moving apparatus by which contamination of the ocean can be prevented even when oil is leaked by installing a protection box around the hydraulic motor, and a method of transporting and loading/unloading a wind power generator assembly by using the same.

Another object of the present invention is to provide a wind power generator moving apparatus by which a rail and a movable deck can be brought into rolling contact with each other by installing a rolling part between the rail and the movable deck, making it possible to easily move the movable deck with a small force, and a method of transporting and loading/unloading a wind power generator assembly by using the same.

Another object of the present invention is to provide a wind power generator moving apparatus by which the wind power generator assembly can be moved to an accurate position by moving the movable deck through engagement of a rack and a pinion, and a method of transporting and loading/unloading a wind power generator assembly by using the same.

Another object of the present invention is to provide a wind power generator moving apparatus by which an equipment utilization rate of a ship can be maximized by employing a winch and a wire in the driving unit to use existing equipment of the ship, and a method of transporting and loading/unloading a wind power generator assembly by using the same.

Another object of the present invention is to provide a wind power generator moving apparatus by which the movable deck can be reciprocated by installing winches at front and rear ends of the movable deck, and a method of transporting and loading/unloading a wind power generator assembly by using the same.

Another object of the present invention is to provide a wind power generator moving apparatus by which the wind power generator assembly can be more firmly fixed to the movable deck by employing a plurality of rotatable support cylinders between the wind power generator assembly and the movable deck in an anchoring unit, and a method of transporting and loading/unloading a wind power generator assembly by using the same.

Another object of the present invention is to provide a wind power generator moving apparatus by which an active measure can be conducted even when a ship is inclined by waves or during an operation by detecting hydraulic pressure with load cells and controlling the support cylinders in response to signals transferred from the load cells, and a method of transporting and loading/unloading a wind power generator assembly by using the same.

Another object of the present invention is to provide a wind power generator moving apparatus by which the support cylinders can be easily repaired by installing ancillary cylinders between the housings of the support cylinders and the movable deck, and a method of transporting and loading/unloading a wind power generator assembly by using the same.

Another object of the present invention is to provide a wind power generator moving apparatus by which an optimum efficiency can be obtained in various environments by selectively employing a winch, an electric motor, and a hydraulic motor in the driving unit of the movable deck, and a method of transporting and loading/unloading a wind power generator assembly by using the same.

### [Technical Solution]

In accordance with an aspect of the present invention, there is provided a wind power generator assembly moving apparatus including: a rail installed on a dedicated wind power generator installing ship such that one end thereof is located inside an operation radius of a crane and an opposite end thereof is located outside the operation radius of the crane; a movable deck installed to be movable along the rail and provided such that a wind power generator assembly is loaded on the movable deck; a driving unit provided to move the movable deck; and an anchoring unit provided to fix the wind power generator assembly loaded on the movable deck to the movable deck.

The driving unit may include an electric motor.

The rail may correspond to a T-shaped beam extending in parallel and having a web and a flange formed on the web to be perpendicular to the web, and the movable deck may include a rolling unit including a main roller formed to correspond to an upper surface of the flange of the T-shaped beam and a plurality of ancillary rollers formed to correspond to opposite sides of a lower surface of the flange of the T-shaped beam.

The driving unit may include a pinion installed in the movable deck and rotated by the electric motor, and a rack formed along a side surface of the rail and engaged with the pinion such that the movable deck is movable as the pinion rotates.

The electric motor may include a frequency converter for driving, and a transformer for adjusting a voltage of the motor according to a load.

The driving unit may include a hydraulic motor.

The rail may correspond to a T-shaped beam extending in parallel and having a web and a flange formed on the web to be perpendicular to the web, and the movable deck may include a rolling unit including a main roller formed to correspond to an upper surface of the flange of the T-shaped beam and a plurality of ancillary rollers formed to correspond to opposite sides of a lower surface of the flange of the T-shaped beam.

The driving unit may include a pinion installed in the movable deck and rotated by the hydraulic motor, and a rack formed along a side surface of the rail and engaged with the pinion such that the movable deck is movable as the pinion rotates.

The hydraulic motor may include a protection box for preventing contamination thereof in the case of leakage of hydraulic oil.

The driving unit may include a pair of winches installed on the ship to be rotated, and a pair of wires wound on the winches and each of which has one end connected to the movable deck.

The winches may be installed at front and rear ends of the movable deck and provided such that the movable deck reciprocates.

The anchoring unit may include a plurality of support cylinders each of which has one end connected to the movable deck on the dedicated wind power generator installing ship to be rotated and an opposite end connected to a wind power generator assembly to be rotated.

The anchoring unit may further include load cells installed in the support cylinders to detect hydraulic pressure, and a control unit for controlling the support cylinders such that the wind power generator assembly is balanced in response to signals transferred from the load cells.

The the anchoring unit may further include ancillary cylinders for repair of the support cylinders installed between housings of the support cylinders and the movable deck.

In accordance with another aspect of the present invention, there is provided a method of transporting and loading/unloading a wind power generator assembly by using a wind power generator assembly moving apparatus according to the present invention, the method including: assembling a wind power generator on the land; sequentially loading a plurality of assembled wind power generators on a movable deck installed to be movable on a rail of a dedicated wind power generator installing ship; fixing the wind power generators loaded on the movable deck by using an anchoring unit; moving the dedicated ship from a harbor where the wind power generator assembly is loaded to a wind power generator installing offshore region; unloading the wind power generators loaded on the movable deck which are inside an operation radius of a crane of the dedicated ship by using the crane; and moving the wind power generators on the movable decks sequentially disposed on the rail into the operation radius of the crane to sequentially unload the wind power generators.

A driving unit for the movable deck may be at least one selected from a winch, an electric motor, and a hydraulic motor.

### [Description of Drawings]

FIG. 1 is a concept view showing a dedicated wind power generator installing ship in which a wind power generator assembly moving apparatus according to the present invention is installed;
FIG. 2 is a block diagram showing a control state of a wind power plant assembly moving apparatus anchoring unit according to the present invention;
FIG. 3 is a perspective view showing a wind power generator assembly moving apparatus according to a first embodiment of the present invention;

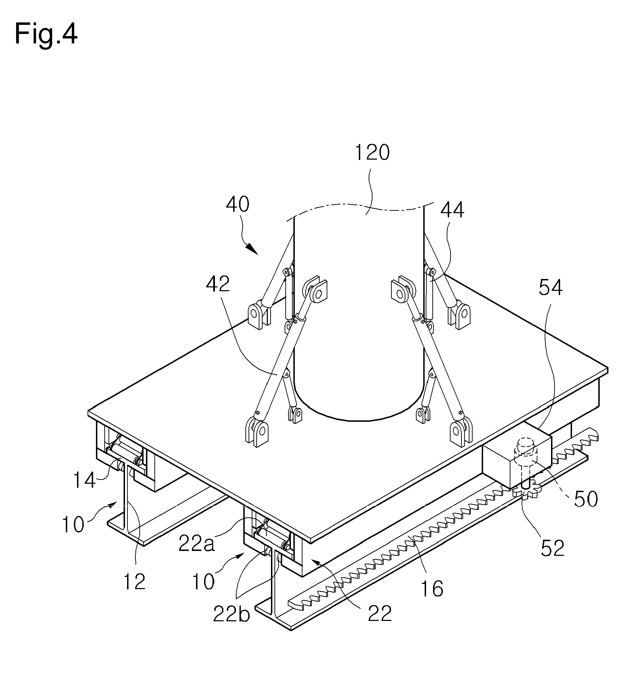

FIG. 4 is a perspective view showing a wind power generator assembly moving apparatus according to a second embodiment of the present invention; and
FIG. 5 is a perspective view showing a wind power plant assembly moving apparatus according to a third embodiment of the present invention.

### [Best Mode]

### [Mode for Invention]

Hereinafter, wind power generator assembly moving apparatuses according to exemplary embodiments of the present invention will be described with reference to the accompanying drawings.

### [First Embodiment]

A wind power generator assembly moving apparatus according to a first embodiment of the present invention includes a rail 10 installed on a dedicated wind power generator installing ship 100, a movable deck 20 installed to be movable along the rain 10, a driving unit for moving the movable deck 20, and an anchoring unit 40 for securing a wind power generator assembly 120.

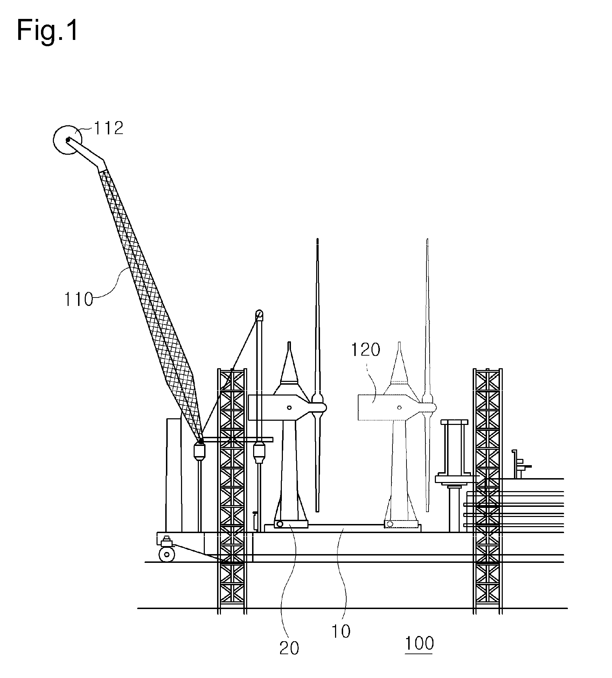

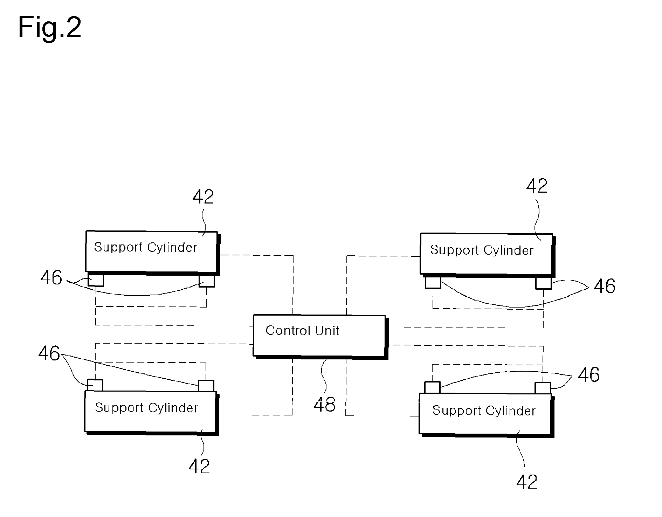

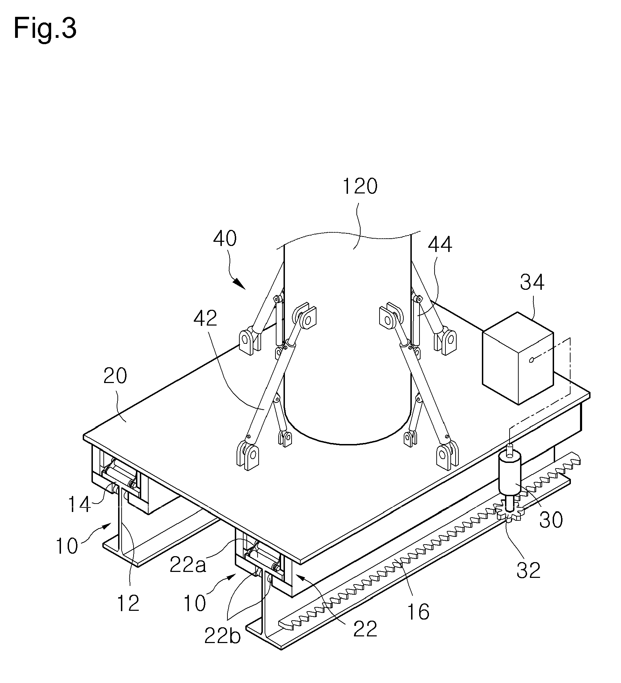

As shown in FIGS. 1 to 3, in the dedicated wind power generator installing ship in which the wind power generator assembly moving apparatus according to the present embodiment, a crane 110 is installed on the dedicated wind power generator installing ship 100 at one side thereof. A hoist 112 for pulling up an article is installed at a tip end of the crane 110.

The rail 10 is installed on dedicated the wind power generator installing ship 100 to extend such that one end thereof is located inside an operation radius of the crane 110 and an opposite end thereof is located outside the operation radius of the crane 110. The rail 10 has a web 12 and a flange 14 vertically formed at an upper portion of the web 12. Thus, the rail 10 corresponds to a T-shaped beam. A plurality of rails 10 extends parallel to each other. A rack 16 is formed on an outer surface of the web 12 along an extension of the rail 10. The rack 16 is engaged with a pinion 32 of an electric motor 30 which is a driving unit to be described below to feed a movable deck 20.

The movable deck 20 is installed to be movable along the rail 10 and a wind power generator assembly 120 is fixed to an upper portion of the deck 20. The wind power generator assembly 120 is fixed to the movable deck 20 by an anchoring unit 40. A rolling unit 22 is installed in the movable deck 20 such that the movable deck 20 is movable along the rail 10. Here, the rolling unit 22 includes a main roller 22a formed to correspond to an upper surface of the flange of the T-shaped beam of the rail 10, and a plurality of ancillary rollers 22b formed to correspond to opposite sides of a lower surface of the flange of the T-shaped beam of the rail 10. Thus, a load facing a lower vertical side of the movable deck 20 is shaft-supported by the main roller 22a, and a load facing an upper vertical side of the movable deck 20 is shaft-supported by the ancillary rollers 22b.

The driving unit includes an electric motor 30 in the present embodiment, and is installed at one side of the movable deck 20 to move the movable deck 20. A pinion 32 is connected to a rotary shaft of the electric motor 30, and is engaged with the rack 16 formed on an outer surface of the web 12 of the rail 10. Accordingly, as the pinion 32 rotates, the movable deck 20 also moves along the rail 10. Here, the electric motor 30 includes a control panel 34 having a frequency converter (not shown) installed to control an RPM of the motor 20, considering a high load of the motor 20 during an operation thereof, and a transformer (not shown) installed to adjust a voltage of the motor 20, considering an inconstant load of the motor 20.

The anchoring unit includes a support cylinder 42, a load cell 46 installed in the support cylinder 42 to detect hydraulic pressure, and a control unit 48 for controlling the support cylinder 42 in response to a signal transferred from the load cell 46.

One end of the support cylinder 42 is installed in the movable deck 20, and an opposite end thereof is installed in the wind power generator assembly 120. The opposite ends of the support cylinder 42 are rotatably hinge-coupled to the movable deck 20 and the wind power generator assembly 120, respectively. Since a load may be applied to the wind power generator assembly 120 from any direction, the support cylinder 42 preferably corresponds to a double acting cylinder which is moved in opposite directions by hydraulic pressure.

The load cell 46 is installed in the support cylinder 42 to measure hydraulic pressure. The hydraulic pressure measured by the load cell 46 is transferred to the control unit so that it can be known from which direction the wind power generator 120 receives a load.

The control unit 48 controls the support cylinder 42 such that the wind power generator assembly 120 can remain balanced in response to a signal transferred from the load cell 46. That is, the control unit 48 may directly detect a direction in which a load is applied to the wind power generator assembly 120 through a pressure detected by the load cell 46, and controls such that the wind power generator assembly 120 can be balanced by adjusting the hydraulic pressure supplied to the support cylinder 42 based on the detected pressure.

An ancillary cylinder 44 is installed between the housing of the support cylinder 42 and the movable deck 20 in the present embodiment. When hydraulic pressure is not supplied in the case of installation or repair of the support cylinder 42, the ancillary cylinder 44 can prevent the support cylinder 42 from being fallen to one side.

### [Second Embodiment]

A wind power generator assembly moving apparatus according to a second embodiment of the present invention includes a rail 10 installed on a dedicated wind power generator installing ship 100, a movable deck 20 installed to be movable along the rain 10, a driving unit for moving the movable deck 20, and an anchoring unit 40 for securing a wind power generator assembly 120.

As shown in FIGS. 1, 2 and 3, in the dedicated wind power generator installing ship in which the wind power generator assembly moving apparatus according to the present embodiment, a crane 110 is installed on the dedicated wind power generator installing ship 100 at one side thereof. A hoist 112 for pulling up an article is installed at a tip end of the crane 110.

The rail 10 is installed on dedicated the wind power generator installing ship 100 to extend such that one end thereof is located inside an operation radius of the crane 110 and an opposite end thereof is located outside the operation radius of the crane 110. The rail 10 has a web 12 and a flange 14 vertically formed at an upper portion of the web 12. Thus, the rail 10 corresponds to a T-shaped beam. A plurality of rails 10 extends parallel to each other. A rack 16 is formed on an outer surface of the web 12 along an extension of the rail 10. The rack 16 is engaged with a pinion 52 of a hydraulic motor 50 which is a driving unit to be described below to feed a movable deck 20.

The movable deck 20 is installed to be movable along the rail 10 and a wind power generator assembly 120 is fixed to an upper portion of the deck 20. The wind power generator assembly 120 is fixed to the movable deck 20 by an anchoring unit 40. A rolling unit 22 is installed in the movable deck 20 such that the movable deck 20 is movable along the rail 10. Here, the rolling unit 22 includes a main roller 22a formed to correspond to an upper surface of the flange of the T-shaped beam of the rail 10, and a plurality of ancillary rollers 22b formed to correspond to opposite sides of a lower surface of the flange of the T-shaped beam of the rail 10. Thus, a load facing a lower vertical side of the movable deck 20 is shaft-supported by the main roller 22a, and a load facing an upper vertical side of the movable deck 20 is shaft-supported by the ancillary rollers 22b.

The driving unit includes an electric motor 30 in the present embodiment, and is installed at one side of the movable deck 20 to move the movable deck 20. A pinion 52 is connected to a rotary shaft of the hydraulic motor 50, and is engaged with the rack 16 formed on an outer surface of the web 12 of the rail 10. Accordingly, as the pinion 52 rotates, the movable deck 20 also moves along the rail 10. Here, the hydraulic motor 50 is connected to hydraulic equipment installed in an existing ship.

Thus, a separate drive source is not required. Further, the hydraulic motor 50 requires a small installation area as compared with an output thereof, a sufficient available area can secured on the ship. Moreover, a protection box 54 for accommodating the hydraulic motor is installed in the hydraulic motor 50 to prevent leakage of hydraulic oil. The protection box 54 can prevent leakage of the hydraulic oil and can prevent contamination of the hydraulic motor 50 due to external contaminants as well.

The anchoring unit includes a support cylinder 42, a load cell 46 installed in the support cylinder 42 to detect hydraulic pressure, and a control unit 48 for controlling the support cylinder 42 in response to a signal transferred from the load cell 46.

One end of the support cylinder 42 is installed in the movable deck 20, and an opposite end thereof is installed in the wind power generator assembly 120. The opposite ends of the support cylinder 42 are rotatably hinge-coupled to the movable deck 20 and the wind power generator assembly 120, respectively. Since a load may be applied to the wind power generator assembly 120 from any direction, the support cylinder 42 preferably corresponds to a double acting cylinder which is moved in opposite directions by hydraulic pressure.

The load cell 46 is installed in the support cylinder 42 to measure hydraulic pressure. The hydraulic pressure measured by the load cell 46 is transferred to the control unit so that it can be known from which direction the wind power generator 120 receives a load.

The control unit 48 controls the support cylinder 42 such that the wind power generator assembly 120 can remain balanced in response to a signal transferred from the load cell 46. That is, the control unit 48 may directly detect a direction in which a load is applied to the wind power generator assembly 120 through a pressure detected by the load cell 46, and controls such that the wind power generator assembly 120 can be balanced by adjusting the hydraulic pressure supplied to the support cylinder 42 based on the detected pressure.

An ancillary cylinder 44 is installed between the housing of the support cylinder 42 and the movable deck 20 in the present embodiment. When hydraulic pressure is not supplied in the case of installation or repair of the support cylinder 42, the ancillary cylinder 44 can prevent the support cylinder 42 from being fallen to one side.

### [Third Embodiment]

A wind power generator assembly moving apparatus according to a third embodiment of the present invention includes a rail 10 installed on a dedicated wind power generator installing ship 100, a movable deck 20 installed to be movable along the rain 10, a driving unit for moving the movable deck 20, and an anchoring unit 40 for securing a wind power generator assembly 120.

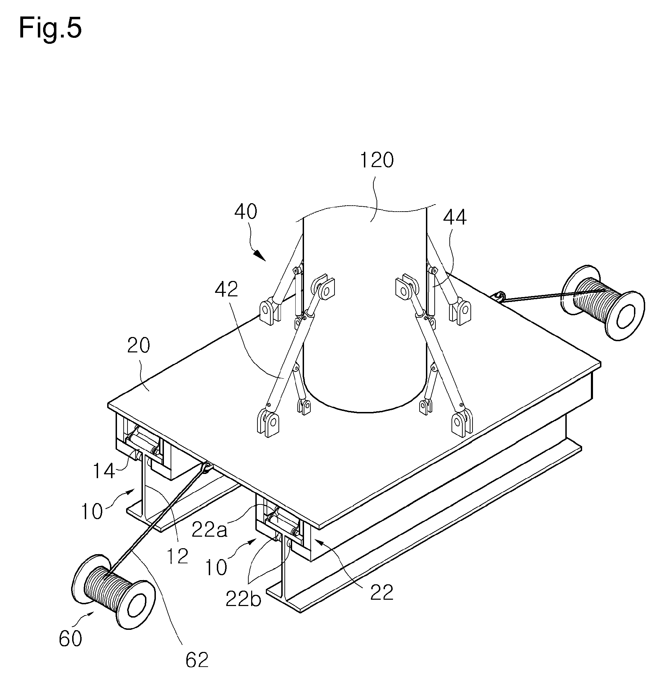

As shown in FIGS. 1, 2 and 5, in the dedicated wind power generator installing ship in which the wind power generator assembly moving apparatus according to the present embodiment, a crane 110 is installed on the dedicated wind power generator installing ship 100 at one side thereof. A hoist 112 for pulling up an article is installed at a tip end of the crane 110.

The rail 10 is installed on dedicated the wind power generator installing ship 100 to extend such that one end thereof is located inside an operation radius of the crane 110 and an opposite end thereof is located outside the operation radius of the crane 110. The rail 10 has a web 12 and a flange 14 vertically formed at an upper portion of the web 12. Thus, the rail 10 corresponds to a T-shaped beam. A plurality of rails 10 extends parallel to each other.

The movable deck 20 is installed to be movable along the rail 10 and a wind power generator assembly 120 is fixed to an upper portion of the deck 20. The wind power generator assembly 120 is fixed to the movable deck 20 by an anchoring unit 40. A rolling unit 22 is installed in the movable deck 20 such that the movable deck 20 is movable along the rail 10. Here, the rolling unit 22 includes a main roller 22a formed to correspond to an upper surface of the flange of the T-shaped beam of the rail 10, and a plurality of ancillary rollers 22b formed to correspond to opposite sides of a lower surface of the flange of the T-shaped beam of the rail 10. Thus, a load facing a lower vertical side of the movable deck 20 is shaft-supported by the main roller 22a, and a load facing an upper vertical side of the movable deck 20 is shaft-supported by the ancillary rollers 22b.

In the present embodiment, the driving unit preferably includes a pair of winches 60, and a pair of wires 62 wound on the winches 60 and each of which has one end connected to the movable deck 20. The winches 60 are installed at front and rear ends of the rail 10 on the dedicated wind power generator installing ship, and the wires 62 wound on the winches 60 are connected to front and rear ends of the movable deck 20, respectively. Thus, as the wires 62 of the winches 60 are rolled, the movable deck 20 is moved forward and rearward along the rail 10.

The anchoring unit includes a support cylinder 42, a load cell 46 installed in the support cylinder 42 to detect hydraulic pressure, and a control unit 48 for controlling the support cylinder 42 in response to a signal transferred from the load cell 46.

One end of the support cylinder 42 is installed in the movable deck 20, and an opposite end thereof is installed in the wind power generator assembly 120. The opposite ends of the support cylinder 42 are rotatably hinge-coupled to the movable deck 20 and the wind power generator assembly 120, respectively. Since a load may be applied to the wind power generator assembly 120 from any direction, the support cylinder 42 preferably corresponds to a double acting cylinder which is moved in opposite directions by hydraulic pressure.

The load cell 46 is installed in the support cylinder 42 to measure hydraulic pressure. The hydraulic pressure measured by the load cell 46 is transferred to the control unit so that it can be known from which direction the wind power generator 120 receives a load.

The control unit 48 controls the support cylinder 42 such that the wind power generator assembly 120 can remain balanced in response to a signal transferred from the load cell 46. That is, the control unit 48 may directly detect a direction in which a load is applied to the wind power generator assembly 120 through a pressure detected by the load cell 46, and controls such that the wind power generator assembly 120 can be balanced by adjusting the hydraulic pressure supplied to the support cylinder 42 based on the detected pressure.

An ancillary cylinder 44 is installed between the housing of the support cylinder 42 and the movable deck 20 in the present embodiment. When hydraulic pressure is not supplied in the case of installation or repair of the support cylinder 42, the ancillary cylinder 44 can prevent the support cylinder 42 from being fallen to one side.

Hereinafter, a method of transporting and loading/unloading a wind power generator assembly by using a wind power generator assembly moving apparatus according to the present invention will be described with reference to the accompanying drawings.

The method of transporting and loading/unloading a wind power generator assembly by using a wind power generator assembly moving apparatus according to the present invention includes a step of assembling a wind power generator 120 on the land, a step of sequentially loading a plurality of assembled wind power generators 120 on a movable deck 20 installed to be movable on a rail of a dedicated ship 100, a step of fixing the wind power generators 120 loaded on the movable deck 20 by using an anchoring unit 40, a step of moving the dedicated ship 100 from a harbor to a wind power generator installing offshore region, a step of unloading the wind power generators loaded on the movable deck 20 which are inside an operation radius of a crane 110 of the dedicated ship 100 by using the crane 110, and a step of moving the wind power generators 120 on the movable decks 20 sequentially disposed on the rail 10 into the operation radius of the crane 110 to sequentially unload the wind power generators 120.

First, in the step of assembling the wind power generator, a tower, a nacelle, and a blade are assembled with the tower being erected.

Next, the plurality of assembled wind power generators 120 are sequentially loaded on the movable deck 20 movably installed on the rail 10 of the dedicated wind power generator installing ship 100.

Since one end of the rail is located inside the operation radius of the crane 110 and an opposite end thereof is located outside the operation radius of the crane 110, the movable deck is preferably installed to cross the operation radius of the crane 110.

Next, the wind power generators loaded on the movable deck are fixed by using an anchoring unit. Then, the anchoring unit 40 includes a plurality of cylinders 42, and is preferably provided to promptly and easily fasten and release the wind power generators 120 if necessary.

Next, the dedicated wind power generator installing ship 100 is moved from a harbor to a wind power generator installing offshore region. Then, since the dedicated wind power generator installing ship 100 receives a load of wind due to the wind power generators 120, a navigation speed of the ship should be controlled to prevent a safety accident.

Next, if the dedicated wind power generator installing ship 100 reaches an installation offshore region, the wind power generators 120 load on the movable deck 20 inside the operation radius of the crane 110 is unloaded first. Then, after a boom of the crane 110 extends to the wind power generator 120 loaded on the movable deck 20 inside the operation radius of the crane 110 and the anchoring unit 40 is released while the power generator 120 is held by a hoist 112 of the crane 110, the wind power generator 120 is moved and loaded to an offshore installation site.

Next, the wind power generator assemblies 120 on the movable decks 20 sequentially disposed on the rail 10 are moved into the operation radius of the crane 110 and are sequentially unloaded. Then, the movable deck 20 outside the operation radius of the crane 110 is fed into the operation radius of the crane 110, and after the anchoring units 40 are sequentially released, the wind power generator assemblies 120 are installed offshore.

Thus, since the wind power generator assemblies 120 can be moved on a deck by using the movable decks 20, even a crane 110 having a small operation radius can perform an unloading operation.

According to the present invention, an assembling time for a wind power generator configured to be movable on a ship can be reduced by feeding the wind power power generator to an offshore installation site after the wind power generator is assembled on the land, making it possible to significantly reduce an entire wind power generator installing time.

Further, a space for assembling the wind power generator can be excluded by easily moving the wind power generator assembly on the ship and feeding the wind power generator assembly to an offshore installation site while the wind power generator assembly is assembled in advance, making it possible to improve a spatial utilization of the ship.

Further, a wind power generator installing operation can be performed even with a crane having a small operation radius by easily moving the wind power generator assembly on the ship.

Further, a driving unit can be easily used even in a severely cold area where a hydraulic motor cannot be used due to a high viscosity of the hydraulic oil by employing an electric motor, thereby making it possible to prevent a breakdown of the driving unit in advance.

Further, energy efficiency can be maximized by installing a frequency converter for driving the electric motor and a transformer for adjusting voltage according to a load.

Further, hydraulic equipment installed in an existing ship can be used as it is by employing a hydraulic motor in the driving unit, which does not require separate accidental expenses for driving.

Further, an installation area for an output can be smaller by employing a hydraulic motor in the driving unit, allowing a sufficient available area on the ship.

Further, contamination of the ocean can be prevented even when oil is leaked by installing a protection box around the hydraulic motor.

Further, a rail and a movable deck can be brought into rolling contact with each other by installing a rolling part between the rail and the movable deck, making it possible to easily move the movable deck with a small force.

Further, the wind power generator assembly can be moved to an accurate position by moving the movable deck through engagement of ta rack and a pinion.

Further, an equipment utilization rate of a ship can be maximized by employing a winch and a wire in the driving unit to use existing equipment of the ship.

Further, the movable deck can be reciprocated by installing winches at front and rear ends of the movable deck.

Further, the wind power generator assembly can be more firmly fixed to the movable deck by employing a plurality of rotatable support cylinders between the wind power generator assembly and the movable deck in an anchoring unit.

Further, an active measure can be conducted even when a ship is inclined by waves or during an operation by detecting hydraulic pressure with load cells and controlling the support cylinders in response to signals transferred from the load cells.

Further, the support cylinders can be easily repaired by installing ancillary cylinders between the housings of the support cylinders and the movable deck.

Further, an optimum efficiency can be obtained in various environments by selectively employing a winch, an electric motor, and a hydraulic motor in the driving unit of the movable deck.

As described above, according to the present invention, a wind power generator assembly can be moved to cross an operation radius of a crane by a movable deck to feed the wind power generator assembly from a harbor to an offshore installation site while the wind power generator assembly is assembled. Thus, the present invention can be applied to various plants including the alternative energy related industries and the shipbuilding industries by significantly reducing an installation time of the wind power generator.

## Claims

1. A wind power generator assembly moving apparatus comprising:
a rail installed on a dedicated wind power generator installing ship such that one end thereof is located inside an operation radius of a crane and an opposite end thereof is located outside the operation radius of the crane;
a movable deck installed to be movable along the rail and provided such that a wind power generator assembly is loaded on the movable deck;
a driving unit provided to move the movable deck; and
an anchoring unit provided to fix the wind power generator assembly loaded on the movable deck to the movable deck.

2. The wind power generator assembly moving apparatus of claim 1, wherein the driving unit comprises an electric motor.

3. The wind power generator assembly moving apparatus of claim 1 or 2, wherein the rail corresponds to a T-shaped beam extending in parallel and having a web and a flange formed on the web to be perpendicular to the web, and the movable deck comprises a rolling unit including a main roller formed to correspond to an upper surface of the flange of the T-shaped beam and a plurality of ancillary rollers formed to correspond to opposite sides of a lower surface of the flange of the T-shaped beam.

4. The wind power generator assembly moving apparatus of claim 2, wherein the driving unit comprises a pinion installed in the movable deck and rotated by the electric motor, and a rack formed along a side surface of the rail and engaged with the pinion such that the movable deck is movable as the pinion rotates.

5. The wind power generator assembly moving apparatus of claim 4, wherein the electric motor comprises a frequency converter for driving, and a transformer for adjusting a voltage of the motor according to a load.

6. The wind power generator assembly moving apparatus of claim 1, wherein the driving unit comprises a hydraulic motor.

7. The wind power generator assembly moving apparatus of claim 1 or 6, wherein the rail corresponds to a T-shaped beam extending in parallel and having a web and a flange formed on the web to be perpendicular to the web, and the movable deck comprises a rolling unit including a main roller formed to correspond to an upper surface of the flange of the T-shaped beam and a plurality of ancillary rollers formed to correspond to opposite sides of a lower surface of the flange of the T-shaped beam.

8. The wind power generator assembly moving apparatus of claim 6, wherein the driving unit comprises a pinion installed in the movable deck and rotated by the hydraulic motor, and a rack formed along a side surface of the rail and engaged with the pinion such that the movable deck is movable as the pinion rotates.

9. The wind power generator assembly moving apparatus of claim 8, wherein the hydraulic motor includes a protection box for preventing contamination thereof in the case of leakage of hydraulic oil.

10. The wind power generator assembly moving apparatus of claim 1, wherein the driving unit comprises a pair of winches installed on the ship to be rotated, and a pair of wires wound on the winches and each of which has one end connected to the movable deck.

11. The wind power generator assembly moving apparatus of claim 10, wherein the winches are installed at front and rear ends of the movable deck and provided such that the movable deck reciprocates.

12. The wind power generator assembly moving apparatus of claim 1, wherein the anchoring unit comprises a plurality of support cylinders each of which has one end connected to the movable deck on the dedicated wind power generator installing ship to be rotated and an opposite end connected to a wind power generator assembly to be rotated.

13. The wind power generator assembly moving apparatus of claim 12, wherein the anchoring unit further comprises load cells installed in the support cylinders to detect hydraulic pressure, and a control unit for controlling the support cylinders such that the wind power generator assembly is balanced in response to signals transferred from the load cells.

14. The wind power generator assembly moving apparatus of claim 12 or 13, wherein the anchoring unit further comprises ancillary cylinders for repair of the support cylinders installed between housings of the support cylinders and the movable deck.

15. A method of transporting and loading/unloading a wind power generator assembly by using a wind power generator assembly moving apparatus, the method comprising:
assembling a wind power generator on the land;
sequentially loading a plurality of assembled wind power generators on a movable deck installed to be movable on a rail of a dedicated wind power generator installing ship;
fixing the wind power generators loaded on the movable deck by using an anchoring unit;
moving the dedicated ship from a harbor where the wind power generator assembly is loaded to a wind power generator installing offshore region;
unloading the wind power generators loaded on the movable deck which are inside an operation radius of a crane of the dedicated ship by using the crane; and
moving the wind power generators on the movable decks sequentially disposed on the rail into the operation radius of the crane to sequentially unload the wind power generators.

16. The method of claim 15, wherein a driving unit for the movable deck includes at least one selected from a winch, an electric motor, and a hydraulic motor.
